# FASCICULE DE BREVET EUROPEEN

(11) **EP 0 557 142 B1**
(45) Date de publication et mention de la délivrance du brevet: **23.07.1997**
(21) Numéro de dépôt: 93400096.9
(22) Date de dépôt: 15.01.1993
(51) Int. Cl.: G06F 11/00, G06F 11/28

(54) **Procédé et dispositif pour la surveillance temporelle du fonctionnement d'un processeur**
Verfahren und Vorrichtung zur zeitlichen Überwachung des Betriebes eines Prozessors
Method and device for temporally monitoring the operation of a processor

(30) Priorité: 21.02.1992 FR 9202022
(43) Date de publication de la demande: 25.08.1993
(73) Titulaire: SEXTANT AVIONIQUE, F-92366 Meudon la Forêt Cédex (FR)
(72) Inventeur: Humez, Olivier, F-78140 Velizy Villacoublay (FR); Fumey, Marc, F-75005 Paris (FR)
(74) Mandataire: de Saint-Palais, Arnaud Marie

(56) Documents cités:
- EP-A- 0 184 397
- EP-A- 0 369 963
- DE-A- 3 704 318
- GB-A- 2 185 339

## Description

La présente invention concerne un procédé et un dispositif pour la surveillance temporelle du fonctionnement d'un processeur.

Elle s'applique notamment, mais non exclusivement, à la surveillance des processeurs embarqués à bord des aérodynes.

On sait que dans le but d'effectuer cette surveillance qui est cruciale dans ce type d'applications, plusieurs types de solutions ont été proposés jusqu'ici.

Une solution d'un premier type consiste à doubler le processeur à l'aide d'un processeur redondant qui exécute les mêmes tâches, et à comparer les résultats obtenus par ces deux processeurs. Un circuit logique d'arbitrage permet alors de déterminer le processeur défaillant.

Cette solution, qui permet d'obtenir un haut niveau de sécurité, demeure d'un coût élevé souvent rédhibitoire dans des applications à grand volume.

D'autres solutions font intervenir des processeurs conçus de manière à transmettre périodiquement, à un circuit de surveillance ("Watchdog"), des impulsions dont la fréquence est représentative d'une fréquence caractéristique du fonctionnement du processeur, par exemple la fréquence machine ou la fréquence des cycles temps réel.

Si la fréquence de ces impulsions devient inférieure à une fréquence prédéterminée ("Watchdog" à "Time out"), ou est en dehors d'un intervalle de fréquence prédéterminé ("Watchdog" à fenêtre), le circuit de surveillance transmet au processeur un signal d'alarme, habituellement un signal de remise à zéro.

Dans un cas comme dans l'autre, les circuits de surveillance surveillent uniquement la fréquence des impulsions émises par le processeur en réagissant, soit sur les fronts montants, soit sur les fronts descendants des impulsions.

Des surveillances plus sévères sont également obtenues à l'aide de circuits ("Watchdog" à double fenêtre) permettant de vérifier que :
- la fréquence de récurrence du signal transmis par le processeur est comprise dans un intervalle de fréquence prédéterminé ;
- la durée de l'état haut de l'impulsion est limitée à un temps maximum.

Il s'avère que ces dispositifs se bornent à vérifier le bon déroulement d'un cycle programme. Par contre, ils ne permettent pas de vérifier l'état des calculs effectués par le processeur ou la validité des données qu'ils engendrent.

Un autre inconvénient de ces solutions apparaît dans les systèmes à activité répartie, faisant intervenir plusieurs processeurs destinés à communiquer entre eux et travaillant avec une horloge temps réel. Dans ces systèmes, à chaque coup d'horloge temps réel, correspond une tâche logicielle précise. Si un processeur saute une tâche, il devient désynchronisé par rapport à ses voisins.

On constate que les circuits de surveillance précédemment décrits ne permettent pas de discerner ce type de fautes. En outre, ils ne permettent pas le test du coeur numérique en cours d'exécution de l'application avec un haut taux de couverture.

L'invention a plus particulièrement pour but de supprimer ces inconvénients, en effectuant une surveillance temporelle de l'exécution des tâches logicielles d'un programme applicatif par le processeur ainsi que la santé du coeur numérique.

Elle propose, à cet effet, un procédé selon lequel on décompose le programme applicatif en un nombre entier M de cycles temps réel, dans chacun desquels une tâche réelle ou virtuelle est exécutée, ces cycles se succédant selon un rythme imposé par une horloge temps réel qui délivre un signal périodique de période récurrente T comprenant deux états successifs respectivement de durée T₁ et T₂, à savoir : un état T₁ qui engendre une interruption du processeur et un état T₂ au cours duquel doit s'exécuter la susdite tâche.

Selon l'invention, ce procédé est caractérisé en ce qu'il comprend les phases suivantes :
- la détection, par le processeur, de la transition du signal de l'horloge temps réel marquant le début de chaque cycle temps réel, et la détermination, par le processeur, de l'heure temps réel à laquelle s'est produite cette transition ;
- la mémorisation, par le processeur, de cette heure temps réel dans un registre temps réel, appelé registre de cohérence prévu dans un circuit de surveillance ;
- la vérification, par ledit circuit de surveillance, que cette mémorisation s'est effectuée pendant la période T₁ au cours de laquelle le signal d'horloge temps réel est dans son premier état ;
- la transmission d'un premier signal de défaut dans le cas où ladite mémorisation ne s'est pas totalement effectuée pendant la période T₁ ;
- la détection et le comptage, par un second compteur interne au circuit de surveillance, des susdites transitions du signal d'horloge temps réel ;
- la comparaison, au cours de la durée T₂, de l'heure temps réel contenue dans le registre de cohérence et de l'heure temps réel déterminée à partir du contenu du susdit compteur ;
- la transmission d'un deuxième signal de défaut dans le cas où la comparaison fait apparaître une discordance.

Avantageusement, la calibration de la durée T₁ du premier état du signal d'horloge temps réel est réglée de manière à ce que le processeur ait juste le temps de mémoriser dans le registre de cohérence la valeur de l'heure temps réel.

Les signaux de défaut émis par le circuit de surveillance pourront être interprétés par un automate auxiliaire de gestion des pannes ou bien pourront consister en un signal de remise à zéro pouvant, par exemple, provoquer la remise à zéro de l'heure temps réel et du registre de cohérence. Le système réinitialisé est alors prêt à repartir ou mis dans l'attente d'un signal de synchronisation externe avant de repartir, en synchronisme, sur un cycle de travail externe.

Comme cela apparaîtra plus clairement dans la suite de la description, un intérêt notoire de ce procédé consiste en ce qu'il permet :
- de surveiller le déroulement des différentes phases logicielles en vérifiant qu'il n'y a pas de saut : en effet, à chaque tâche logicielle correspond une heure temps réel programme qui est déclarée au circuit de surveillance, lequel la compare à son heure temps réel interne ; un saut de déroulement programme engendrant un déphasage entre l'heure temps réel programme et l'heure temps réel interne et une réaction pouvant être l'émission d'un signal de remise à zéro ;
- de pouvoir tester le fonctionnement du processeur au niveau des interruptions, de l'unité arithmétique et logique (ALU) et une partie de son environnement.

Un mode de mise en oeuvre du procédé selon l'invention sera décrit ci-après, à titre d'exemple non limitatif, avec référence aux dessins annexés dans lesquels :
La figure 1 est une représentation schématique montrant la connexion d'un circuit de surveillance à un processeur et à une mémoire destinée à assurer le décodage des heures temps réel ;
La figure 2 est un schéma synoptique de la structure interne d'un circuit de surveillance ;
Les figures 3 à 5 sont des diagrammes temporels permettant d'illustrer le principe de fonctionnement du circuit de surveillance, en fonctionnement normal (figure 3), lors d'une erreur suivie d'une remise à zéro puis d'une remise en route automatique (figure 4), ou à la suite d'une impulsion de synchronisation externe (figure 5) ;
La figure 6 est un exemple d'organigramme d'un logiciel exécuté par le processeur conformément au procédé selon l'invention ;
La figure 7 est une représentation schématique d'une architecture multiprocesseur à arbitre synchronisateur commun.

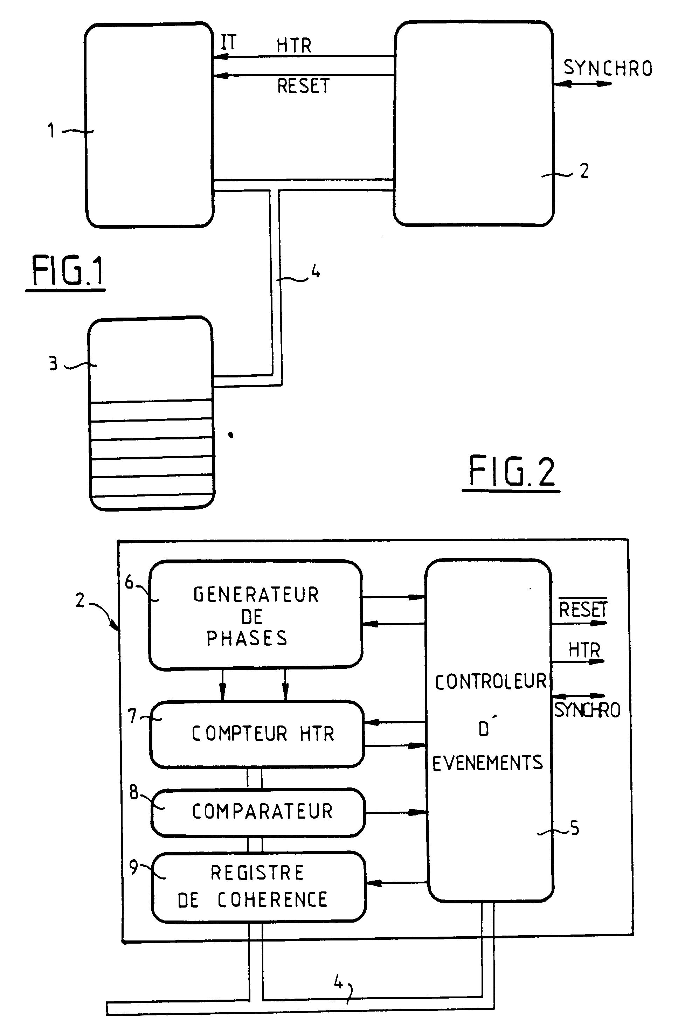

Dans l'exemple représenté sur la figure 1, le processeur 1 est relié à un circuit de surveillance 2 et à une mémoire de type ROM 3, dont la fonction sera déterminée dans la suite par l'intermédiaire d'un BUS 4. Il reçoit, en outre, un signal d'horloge temps réel HTR émis par une horloge temps réel incorporée au circuit de surveillance 2.

D'une façon plus précise, le circuit de surveillance 2 peut comprendre, comme indiqué sur la figure 2, un contrôleur d'événements 5 apte à émettre, en direction du processeur 1, un signal d'horloge temps réel HTR, un signal de remise à zéro RESET, ainsi qu'un signal de synchronisation externe bidirectionnel (SYNCHRO) utilisable par un arbitre externe.

Ce contrôleur d'événements 5 est, par ailleurs, connecté par des liaisons bidirectionnelles à un générateur de phases 6 et à un compteur d'impulsions d'horloge temps réel 7 qui est également relié, par une liaison bidirectionnelle, au générateur de phases 6.

Le compteur 7 est relié, par sa sortie, à l'une des entrées d'un comparateur 8 dont la deuxième entrée est connectée à un registre de cohérence 9 relié au BUS 4. La sortie du comparateur est, quant à elle, appliquée au contrôleur d'événements 5, lequel effectue, en outre, le pilotage du registre de cohérence 9.

Comme précédemment mentionné, le processeur 1 est programmé de manière à exécuter un nombre entier M de tâches réelles ou virtuelles à raison d'une tâche déterminée au cours de chacune des périodes temps réel T du signal temps réel HTR engendré par le circuit de surveillance 2.

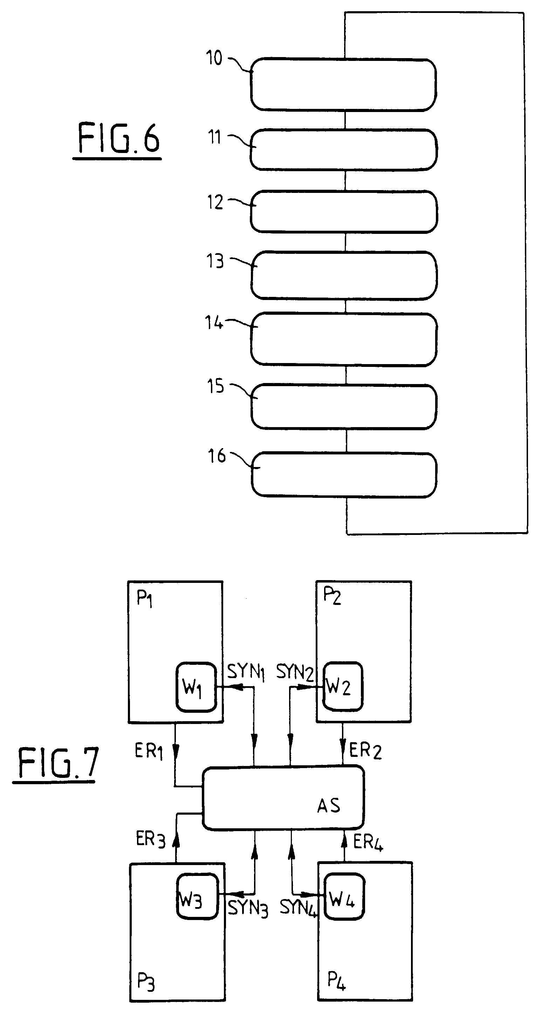

En fait, ce signal est appliqué à une entrée d'interruption IT du processeur 1, lequel peut effectuer, comme illustré sur la figure 6, à la suite de la prise en compte d'une interruption déclenchée par un top du signal d'horloge temps réel (bloc 10), une séquence comportant les étapes suivantes :
- une étape d'identification de la tâche précédente N (bloc 11) ;
- une étape de détermination de la tâche suivante N + 1 (bloc 12) ;
- une étape de recherche dans la mémoire ROM de l'heure temps réel associée au début de la tâche N + 1 (bloc 13) ;
- une étape de test global ou partiel indexé sur l'heure temps réel précédemment trouvée, ce test étant suivi, dans le cas où il est positif, d'un décodage de l'heure temps réel fournie par la mémoire ROM ; dans le cas où il est négatif, il peut, par exemple, provoquer un arrêt du programme en cours d'exécution par le processeur 1 (bloc 14) ;
- une étape de transmission au circuit de surveillance 2 par le BUS 4 de l'information relative à l'heure temps réel précédemment décodée (bloc 15) ;
- une étape d'exécution de la tâche logicielle N + 1 (bloc 16), la fin de cette étape marquant le rebouclage du programme en vue de la prise en compte d'une nouvelle interruption (c'est-à-dire d'un nouveau top de l'horloge temps réel).

Le circuit de surveillance 2 transmet au processeur le signal d'horloge temps réel HTR qui est élaboré par le générateur de phases 6 en coopération avec le contrôleur d'événements 5.

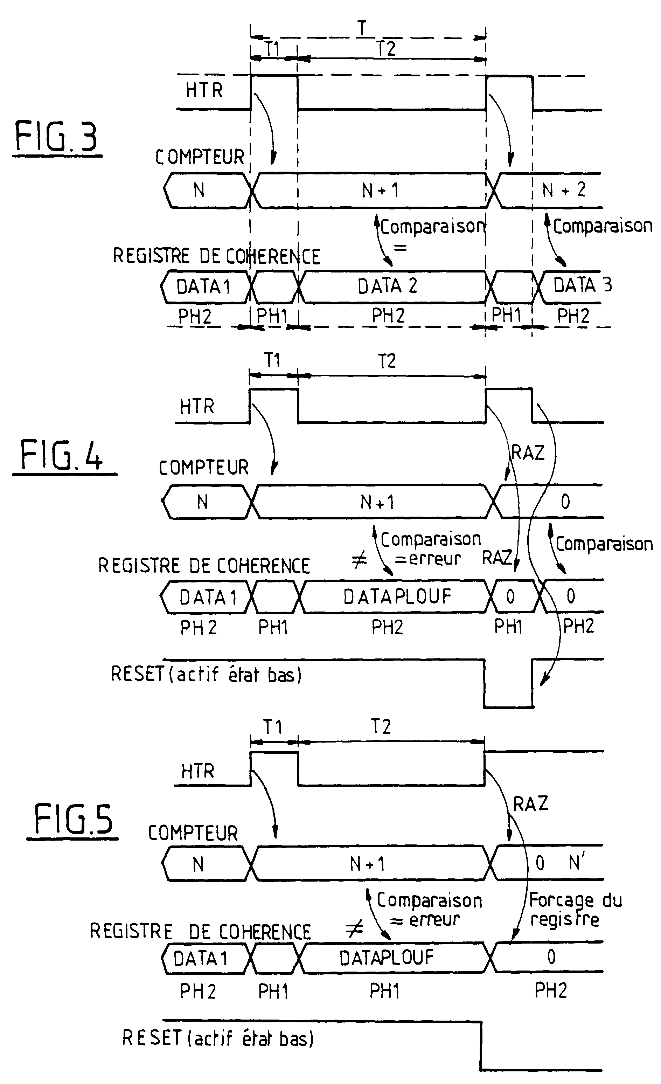

Ce signal HTR, de nature périodique, présente une succession de cycles temps réel avec une période de récurrence T, au cours de laquelle il passe d'un premier état qui se maintient pendant une durée T₁ (phase 1 qui correspond au top d'horloge) à un deuxième état qui se maintient pendant une durée T₂ (phase 2). La période T étant égale à la somme des durées T₁ et T₂ (figures 3 à 5).

Dans la suite de la description, le premier état correspond à un état haut du signal (niveau logique 1), tandis que le second état correspond à un état bas du signal (niveau logique 0).

Le compteur 7 du circuit de sécurité 2 effectue un comptage des cycles temps réel et est incrémenté, en fonctionnement normal, à chaque front montant du signal d'horloge temps réel HTR qui marque le début de la phase PH₁ de chaque cycle temps réel.

Pendant la phase PH₁ où le signal d'horloge temps réel HTR est à l'état haut, le processeur 1 accède, par l'intermédiaire du BUS 4, au registre de cohérence 9 où il doit écrire la nouvelle valeur de l'heure temps réel.

Lors de la phase PH₂, qui débute sur le front descendant du signal d'horloge temps réel HTR, le processeur 1 ne doit plus venir écrire dans le registre de cohérence 9. S'il effectue une telle action, cette faute sera détectée par le contrôleur d'événements 5 qui émettra un signal de remise à zéro RESET en direction du processeur 1.

Pendant la phase PH₂, le circuit de surveillance 2 effectue une comparaison entre le contenu de son compteur 7 et le contenu du registre de cohérence 9.

Si cette comparaison ne vérifie pas l'égalité des deux contenus, le comparateur 8 transmet au contrôleur d'événements un signal de disparité. A la suite de la réception de ce signal, le contrôleur 5 transmet au processeur 1 un signal RESET qui provoque une procédure de remise à zéro telle que celles qui sont illustrées sur les figures 4 et 5.

Par contre, si le comparateur 8 révèle une identité =, le fonctionnement est considéré normal et se poursuit comme indiqué sur la figure 3.

Sur cette figure, on a indiqué, en correspondance temporelle, le signal d'horloge temps réel HTR, l'évolution du contenu du compteur 7 ainsi que celle du registre de cohérence.

Le front montant du signal d'horloge HTR qui marque le début d'un cycle de période T provoque une incrémentation du compteur 7 qui passe de la valeur N à la valeur N + 1. Parallèlement, le registre de cohérence 9 passe en phase PH₁.

Comme précédemment mentionné, au cours de cette période, le processeur 1 doit écrire dans le registre de cohérence 9, la nouvelle heure temps réel DATA2, l'heure précédente étant désignée DATAI (rafraîchissement du registre de cohérence).

Ce front descendant du signal d'horloge HTR marque la fin de la phase PH₁ et le début de la phase PH₂ au cours de laquelle le comparateur 8 compare le contenu du registre de cohérence 9 et le contenu du compteur 7.

Dans cet exemple, le comparateur 8 révèle une identité = entre les deux contenus. Le processeur 1 exécute la tâche correspondant au cycle temps réel N + 1. La fin de ce cycle est marquée par un nouveau front montant du signal HTR qui déclenche alors un nouveau cycle temps réel N + 2 au cours duquel le processeur doit exécuter une nouvelle tâche.

Il apparaît de façon évidente que, si la fréquence d'horloge du processeur 1 venait à ralentir, cela conduirait ce dernier à écrire au mauvais moment dans le registre de cohérence 9 ou à écrire, dans celui-ci, une mauvaise heure temps réel. Dans un cas comme dans l'autre, cette anomalie sera détectée par le contrôleur d'événements 5 qui transmettra au processeur un signal de remise à zéro. On rappelle que la calibration de la phase PH₁ est ajustée de manière à ce qu'en fonctionnement normal, le processeur 1 ait juste le temps d'écrire la valeur de l'heure temps réel.

Quand le processeur 1 ne fonctionne plus à la suite de la perte de sa propre horloge, il ne rafraîchit plus le registre de cohérence 9. Le comparateur détecte alors immédiatement une disparité.

Dans le cas d'un mauvais fonctionnement du processeur 1 de type affolement, son comportement va tendre, soit à écrire intempestivement des heures dans le registre de cohérence 9, soit à être perdu dans ses identifications de tâches, et ainsi, renvoyer de mauvaises valeurs au registre de cohérence. Le contrôleur d'événements 5 est alors en mesure de donner l'alerte.

Les figures 4 et 5 illustrent deux modes de fonctionnements consécutifs à la génération d'un signal de remise à zéro.

Dans l'exemple représenté sur la figure 4, la comparaison effectuée par le comparateur 8 dans la phase PH₂ révèle une disparité (N + 1 ≠ DATAPLOUF).

Après prise en compte de cette faute, le contrôleur d'événements 5 émet une impulsion de remise à zéro RESET synchronisée sur le front montant du top suivant du signal d'horloge temps réel qui marque le début d'un nouveau cycle. Parallèlement, l'heure temps réel du compteur 7 ainsi que le registre de cohérence 9 sont remis à zéro. Le système réinitialisé peut donc repartir.

Le mode de fonctionnement décrit en regard de la figure 5 est similaire à celui illustré sur la figure 4, à la différence qu'au lieu de repartir au cycle N' qui suit la réinitialisation, le système se bloque à l'état réinitialisé jusqu'à ce que le circuit de surveillance reçoive une impulsion de synchronisation provenant de l'extérieur. A la suite de cette impulsion, le système entame un nouveau cycle temps réel. Ce mode de fonctionnement est particulièrement intéressant pour des applications s'effectuant dans un environnement multiprocesseur. Dans ce cas, on obtient une resynchronisation du processeur 1 sur un cycle de travail externe.

La figure 7 montre une structure multiprocesseurs à laquelle s'applique ce mode de fonctionnement. Dans cet exemple, la structure comprend quatre processeurs P₁, P₂, P₃, P₄ comprenant, chacun, son propre circuit de surveillance W₁, W₂, W₃, W₄.

Chacun de ces circuits W₁ à W₄ est relié à un arbitre synchronisateur commun AS par une liaison bidirectionnelle permettant, d'une part, d'assurer la transmission vers l'arbitre des signaux d'erreur ER₁ à ER₄ et, d'autre part, de recevoir les signaux de synchronisation SYN₁ à SYN₄ élaborés par l'arbitre, par exemple en fonction des cycles temps réel des autres circuits.

L'intérêt du procédé précédemment décrit consiste en ce qu'il permet :
- de surveiller le déroulement des différentes phases logicielles en vérifiant qu'il n'y a pas de saut : en effet, à chaque tâche logicielle correspond une heure temps réel qui doit être déclarée sur le circuit de surveillance en vue d'être comparée avec l'heure temps réel interne de ce circuit ; un saut de déroulement de programme implique un déphasage avec l'heure interne au circuit de surveillance et une réaction qui peut être l'émission d'un signal de remise à zéro ;
- de pouvoir tester le fonctionnement du processeur au niveau des interruptions, de l'unité arithmétique et logique et d'une partie de son environnement, et ce, moyennant un algorithme lancé à chaque cycle temps réel, qui fonctionne, au niveau du décryptage de l'heure, avec des variables qui changent à chaque heure temps réel.

On obtient une efficacité beaucoup plus élevée qu'avec un algorithme lancé à chaque cycle temps réel mais travaillant avec des variables fixes, en vue de fournir un résultat fixe.

## Revendications

1. Procédé pour la surveillance temporelle du fonctionnement d'un processeur (1), procédé selon lequel on fait exécuter le programme applicatif au cours de cycles temps réel dans chacun desquels une tâche est exécutée, ces cycles se succédant selon un rythme imposé par une horloge temps réel qui délivre un signal périodique de période récurrente (T) comprenant deux états successifs respectivement pendant une première période (T₁) et une seconde période (T₂),
caractérisé en ce qu'il comprend les phases suivantes :
- la détection, par le processeur, de la transition du signal (HTR) de l'horloge temps réel marquant le début de chaque cycle temps réel, et la détermination, par le processeur (1), de l'heure temps réel à laquelle s'est produite cette transition ;
- la mémorisation, par le processeur (1), de cette heure temps réel dans un registre temps réel (9), appelé registre de cohérence prévu dans un circuit de surveillance (2) ;
- la vérification, par ledit circuit de surveillance (2), que cette mémorisation s'est effectuée pendant la première période (T₁) au cours de laquelle le signal d'horloge temps réel (HTR) est dans son premier état ;
- la transmission d'un premier signal de défaut dans le cas où ladite mémorisation ne s'est pas totalement effectuée pendant la première période (T₁) ;
- la détection et le comptage, par un compteur (7) interne au circuit de surveillance (2), des susdites transitions du signal d'horloge temps réel (HTR) ;
- la comparaison, au cours de la seconde période (T₂), de l'heure temps réel contenue dans le registre de cohérence (9) et de l'heure temps réel déterminée à partir du contenu du susdit compteur (7) ;
- la transmission d'un deuxième signal de défaut dans le cas où la comparaison fait apparaître une discordance.

2. Procédé selon la revendication 1,
caractérisé en ce que la calibration de la durée (T₁) du premier état du signal d'horloge temps réel (HTR) est réglée de manière à ce que le processeur (1) ait juste le temps de mémoriser dans le registre de cohérence (9) la valeur de l'heure temps réel.

3. Procédé selon l'une des revendications 1 et 2,
caractérisé en ce qu'il comprend en outre l'interprétation par un automate auxiliaire de gestion des pannes des signaux de défaut émis par le circuit de surveillance (2).

4. Procédé selon l'une des revendications 1 et 2,
caractérisé en ce que les signaux de défaut émis par le circuit de surveillance (2) consistent en des signaux de remise à zéro provoquant la remise à zéro du registre de cohérence (9), ainsi que l'heure temps réel du compteur (7).

5. Procédé selon la revendication 4,
caractérisé en ce que la susdite remise à zéro provoque une remise à zéro du processeur (1) et, après la susdite remise à zéro, la remise en route du programme applicatif s'effectue automatiquement ou à la suite de la réception par le circuit de surveillance d'un signal de synchronisation (SYN).

6. Procédé selon la revendication 5,
caractérisé en ce que le susdit signal de synchronisation est engendré par un arbitre synchronisateur (AS) recevant les signaux de défaut émis par plusieurs circuits de surveillance (W₁ à W₄) affectés à plusieurs processeurs respectifs (P₁ à P₄).

7. Dispositif pour la surveillance temporelle du fonctionnement d'un processeur conformément au procédé selon la revendication 1,
caractérisé en ce qu'il comprend un circuit de surveillance comportant :
- des moyens (5, 6) aptes à engendrer un signal d'horloge temps réel (HTR) et à appliquer ce signal audit processeur (1) ;
- un compteur (7) qui reçoit le signal d'horloge (HTR) et dont le contenu est représentatif de l'heure temps réel au début de chaque cycle temps réel (T) ;
- un registre de cohérence (9) dans lequel le processeur (1) écrit l'heure temps réel qu'il a déterminée à partir du signal d'horloge temps réel (HTR) ;
- des moyens (5) permettant d'émettre un premier signal de défaut dans le cas où la mémorisation de l'heure temps réel dans le registre de cohérence (9) n'est pas exécutée au cours d'une période de temps prédéterminée (PH₁) du cycle temps réel ; et
- un comparateur (8) qui compare le contenu du compteur (7) avec celui du registre de cohérence (9) et qui émet un deuxième signal de défaut dans le cas où cette comparaison fait apparaître une discordance.

8. Dispositif selon la revendication 7,
caractérisé en ce qu'il comprend des moyens permettant d'effectuer une remise à zéro du registre de cohérence (9) et du compteur (7) à la suite de l'émission des susdits signaux de défaut.

9. Dispositif selon l'une des revendications 7 et 8,
caractérisé en ce qu'il comprend des moyens aptes à engendrer un signal de remise à zéro du processeur (1) et un signal permettant de bloquer la remise en route du programme applicatif, après la susdite remise à zéro jusqu'à la réception d'un signal de synchronisation (SYN₁ à SYN₄).

10. Dispositif selon la revendication 9,
caractérisé en ce que qu'il comprend un arbitre synchronisateur (AS) qui reçoit les signaux de défaut (ER₁ à ER₄) de plusieurs processeurs (P₁ à P₄) et qui émet un signal de synchronisation (SYN₁ à SYN₄) vers chacun des processeurs (P₁ à P₄).

## Patentansprüche

1. Verfahren zur zeitlichen Überwachung des Betriebs eines Prozessors (1), gemäß dem man das Anwendungsprogramm während Echtzeit-Zyklen ausführen läßt, in jedem von welchen eine Task ausgeführt wird, wobei diese Zyklen gemäß einem von einem Echtzeit-Taktgeber aufgezwungenen Rhythmus aufeinander folgen, der ein periodisches Signal einer sich wiederholenden Periode (T) liefert, das zwei aufeinanderfolgende Zustände während einer ersten Periode (T₁) bzw. einer zweiten Periode (T₂) enthält, dadurch gekennzeichnet, daß das Verfahren die folgenden Phasen aufweist:
- die Erfassung des Übergangs des Signals (HTR) des Echtzeit-Taktgebers, das den Anfang jedes Echtzeit-Zyklus markiert, durch den Prozessor, und die Bestimmung der Echtzeit-Uhrzeit, zu der dieser Übergang stattgefunden hat, durch den Prozessor (1);
- die Speicherung dieser Echtzeit-Uhrzeit durch den Prozessor (1) in einem Kohärenz-Register genannten Echtzeit-Register (9), das in einer Überwachungsschaltung (2) vorgesehen ist;
- die Überprüfung durch die Überwachungsschaltung (2), daß diese Speicherung während der ersten Periode (T₁) stattgefunden hat, während der das Echtzeit-Taktsignal (HTR) sich in seinem ersten Zustand befindet;
- die Übertragung eines ersten Fehlersignals, wenn die Speicherung nicht vollständig während der Periode (T₁) stattgefunden hat;
- die Erfassung und das Zählen der Übergänge des Echtzeit-Taktsignals (HTR) durch einen inneren Zähler (7) der Überwachungsschaltung (2);
- der Vergleich während der zweiten Periode (T₂) der Echtzeit-Uhrzeit, die im Kohärenzspeicher (9) enthalten ist, mit der Echtzeit-Uhrzeit, die ausgehend vom Inhalt des Zählers (7) bestimmt wird;
- die Übertragung eines zweiten Fehlersignals, wenn der Vergleich eine Ungleichheit aufzeigt.

2. Verfahren nach Anspruch 1, dadurch gekennzeichnet, daß die Kalibrierung der Dauer (T₁) des ersten Zustands des Echtzeit-Taktsignals (HTR) so geregelt ist, daß der Prozessor (1) gerade die Zeit hat, im Kohärenzregister (9) den Wert der Echtzeit-Uhrzeit zu speichern.

3. Verfahren nach einem der Ansprüche 1 und 2, dadurch gekennzeichnet, daß es weiter die Interpretierung der von der Überwachungsschaltung (2) gesendeten Fehlersignale durch einen Fehlerverwaltungs-Hilfsautomaten aufweist.

4. Verfahren nach einem der Ansprüche 1 und 2, dadurch gekennzeichnet, daß die von der Überwachungsvorrichtung (2) ausgesendeten Fehlersignale aus Nullsetzungssignalen bestehen, die die Nullsetzung des Kohärenzregisters (9) und der Echtzeit-Uhrzeit des Zählers (7) bewirken.

5. Verfahren nach Anspruch 4, dadurch gekennzeichnet, daß die Nullsetzung eine Nullsetzung des Prozessors (1) nach dieser Nullsetzung bewirkt, daß das erneute Starten des Anwendungsprogramms automatisch oder nach Empfang eines Synchronisationssignals (SYN) durch die Überwachungsschaltung erfolgt.

6. Verfahren nach Anspruch 5, dadurch gekennzeichnet, daß das Synchronisationssignal von einem Synchronisations-Schlichter (AS) erzeugt wird, der die von mehreren Überwachungsschaltkreisen (W₁ bis W₄), die mehreren-Prozessoren (P₁ bis P₄) zugeordnet sind, gesendeten Fehlersignale empfängt.

7. Vorrichtung zur zeitlichen Überwachung des Betriebs eines Prozessors entsprechend dem Verfahren gemäß Anspruch 1, dadurch gekennzeichnet, daß sie eine Überwachungsschaltung enthält, die aufweist:
- Mittel (5, 6), die ein Echtzeit-Taktsignal (HTR) erzeugen und dieses Signal an den Prozessor (1) anlegen können;
- einen Zähler (7), der das Taktsignal (HTR) empfängt und dessen Inhalt für die Echtzeit-Uhrzeit am Anfang jedes Echtzeit-Zyklus (T) repräsentativ ist;
- ein Kohärenzregister (9), in das der Prozessor (1) die Echtzeit-Uhrzeit einschreibt, die er ausgehend vom Echtzeit-Taktsignal (HTR) bestimmt hat;
- Mittel (5), die es ermöglichen, dann ein erstes Fehlersignal zu senden, wenn die Speicherung der Echtzeit-Uhrzeit im Kohärenzregister (9) nicht während einer vorbestimmten Zeitperiode (PH₁) des Echtzeit-Zyklus durchgeführt wurde; und
- einen Komparator (8), der den Inhalt des Zählers (7) mit dem des Kohärenzregisters (9) vergleicht und ein zweites Fehlersignal aussendet, wenn dieser Vergleich eine Ungleichheit aufzeigt.

8. Vorrichtung nach Anspruch 7, dadurch gekennzeichnet, daß sie Mittel aufweist, die es ermöglichen, nach der Aussendung der Fehlersignale eine Nullsetzung des Kohärenzregisters (9) und des Zählers (7) durchzuführen.

9. Vorrichtung nach einem der Ansprüche 7 und 8, dadurch gekennzeichnet, daß sie Mittel aufweist, die ein Nullsetzungssignal des Prozessors (1) und ein Signal erzeugen können, das es ermöglicht, den Start des Anwendungsprogramms nach der Nullsetzung bis zum Empfang eines Synchronisationssignals (SYN₁ bis SYN₄) zu blockieren.

10. Vorrichtung nach Anspruch 9, dadurch gekennzeichnet, daß sie einen Synchronisations-Schlichter (AS) aufweist, der die Fehlersignale (ER₁ bis ER₄) von mehreren Prozessoren (P₁ bis P₄) empfängt und der ein Synchronisationssignal (SYN₁ bis SYN₄) an jeden der Prozessoren (P₁ bis P₄) sendet.

## Claims

1. A method for temporal monitoring of the operation of a processor (1), method according to which the application programme is executed in real-time cycles during each of which a task is performed, these cycles following one another at a pace imposed by a real-time clock which issues a periodic signal of recurrent period (T) comprising two successive states respectively during a first period (T₁) and a second period (T₂), characterized in that it comprises the following stages:
- the detection, by the processor, of the real-time clock signal (HTR) transition marking the start of each real-time cycle, and the determination, by the processor (1), of the real time at which said transition occurred;
- the memorizing, by the processor (1), of this real time in a real-time register (9) known as a consistency register provided in a watchdog circuit (2);
- the checking, by said watchdog circuit (2), that this memorizing was performed during the first period (T₁) during which the real-time clock signal (HTR) is in its first state;
- the transmission of a first fault signal in the event of said memorizing not being fully performed during the first period (T₁);
- the detection and counting, by a counter (7) inside the watchdog circuit (2), of said transitions of the real-time clock signal (HTR);
- the comparison, during the second period (T₂), of the real time contained in the consistency register (9) with the real time determined from the contents of said counter (7);
- the transmission of a second fault signal in the event of the comparison revealing a discrepancy.

2. The method as claimed in claim 1, characterized in that the calibration of the duration (T₁) of the first state of the real-time clock signal (HTR) is set in such a way that the processor (1) has only just time to memorize the real-time value in the consistency register (9).

3. The method as claimed in either claim 1 or claim 2, characterized in that it further comprises the interpreting, by an auxiliary failure management controller, of the fault signals transmitted by the watchdog circuit (2).

4. The method as claimed in either claim 1 or claim 2, characterized in that the fault signals transmitted by the watchdog circuit (2) consist of reset signals causing the resetting of the consistency register (9) and of the real time in the counter (7).

5. The method as claimed in claim 4, characterized in that said resetting causes the processor (1) to be reset subsequent to said resetting, the restarting of the application programme is carried out automatically or subsequent to reception of a synchronization signal (SYN) by the watchdog circuit.

6. The method as claimed in claim 5, characterized in that said synchronization signal is generated by a synchronizing arbitrator (AS) which receives the fault signals transmitted by plural watchdog circuits (W₁ to W₄) assigned to plural respective processors (P₁ to P₄).

7. A device for temporal monitoring of the operation of a processor embodying the method as claimed in claim 1, characterized in that it comprises a watchdog circuit comprising:
- a means (5, 6) capable of generating a real-time clock signal (HTR) and of applying this signal to said processor (1);
- a counter (7) which receives the clock signal (HTR) and whose contents are representative of the real time at the start of each real-time cycle (T);
- a consistency register (9) into which the processor (1) writes the real time it has determined from the real-time clock signal (HTR);
- a means (5) enabling a first fault signal to be transmitted in the event of the memorizing of the real time in the consistency register (9) not being performed during a predetermined period of time (PH₁) of the real-time cycle; and
- a comparator (8) which compares the contents of the counter (7) with the contents of the consistency register (9) and which transmits a second fault signal in the event of this comparison revealing a discrepancy.

8. The device as claimed in claim 7, characterized in that it comprises a means enabling resetting of the consistency register (9) and counter (7) subsequent to the transmission of said fault signals.

9. The device as claimed in either claim 7 or claim 8, characterized in that it comprises a means capable of generating a processor (1) reset signal and a signal enabling the restarting of the application programme to be blocked, subsequent to said resetting, until a synchronization signal (SYN₁ to SYN₄) has been received.

10. The device as claimed in claim 9, characterized in that it comprises a synchronizing arbitrator (AS) which receives the fault signals (ER₁ to ER₄) from plural processors (P₁ to P₄) and which transmits a synchronization signal (SYN₁ to SYN₄) to each of the processors (P₁ to P₄).
